Europäisches Patentamt

(19) European Patent Office

Office européen des brevets

(11) Publication number: **0 381 388**
**A2**

(12) **EUROPEAN PATENT APPLICATION**

(21) Application number: **90300836.5**

(22) Date of filing: **26.01.90**

(30) Priority: **31.01.89 US 304942**

(43) Date of publication of application:
**08.08.90 Bulletin 90/32**

(84) Designated Contracting States:
**BE DE ES FR GB IT**

(51) Int. Cl.⁵: **B01D 3/22**

(71) Applicant: **GLITSCH, INC.**
**4900 Singleton Boulevard**
**Dallas Texas 75212(US)**

(72) Inventor: **Chen, Gilbert K.**
**3404 Brookhaven Club Dr.**
**Farmers Branch, Texas 75234(US)**
Inventor: **Chuang, Karl T.**
**14717 45 Avenue**
**Edmonton, Alberta Canada T6H5R4(US)**

(74) Representative: **Hitchcock, Esmond Antony et al**
**Lloyd Wise, Tregear & Co. Norman House**
**105-109 Strand**
**London WC2R 0AE(GB)**

(54) Gas-Liquid contacting tray.

㊗ An improved tray assembly for vapor liquid contact towers. A layer of mesh packing is disposed atop a cross-flow sieve tray in a process column for improving mass transfer efficiency. The mesh packing is secured upon the sieve tray, which in one embodiment is comprised of closely spaced rods of trapezoidal cross-section. The mesh packing then gives rise to inhibition to incipient bubble formation, a more uniform froth height and reduced back-mixing across the tray.

EP 0 381 388 A2

## GAS-LIQUID CONTACTING TRAY

The present invention pertains to gas-liquid contacting trays and, more particularly, an improved sieve tray assembly having a layer of mesh packing secured thereon.

Distillation columns are utilized to separate selected components from a multicomponent stream. Generally, such gas-liquid contact columns utilize either trays, packings or combinations thereof. In recent years the trend has been to replace the so-called "bubble caps" by sieve and valve trays in most trayed column designs, and the popularity of packed columns, either random (dumped) or structured packings have been utilized in combination with the trays in order to effect improved separation of the components in the stream.

Successful fractionation in the column is dependent upon intimate contact between liquid and vapor phases. Some vapor and liquid contact devices, such as trays, are characterized by relatively high pressure drop and relatively high liquid hold-up. Another type of vapor and liquid contact apparatus, namely structured high efficiency packing, has also become popular for certain applications. Such packing is energy efficient because it has low pressure drop and low liquid hold-up. However, these very properties at times make columns equipped with structured packing difficult to operate in a stable, consistent manner. Moreover, many applications simply require the use of trays.

When trays are the predominant column contacting devices, there is little need to be concerned about vapor distribution because pressure drop across the trayed column is high. For instance, a typical 40-tray column at operating conditions will normally exhibit about six psi, or 300 mm Hg, pressure drop. This is two orders of magnitude greater than the kinetic energy generated by the incoming vapor. Usually the velocity head of vapor entering a distillation column is no more than about 10 mm Hg in petroleum refining fractionators and no more than about 5 mm in chemical or gas treating columns. It is therefore not surprising that very often little attention is paid to dissipating the kinetic energy of incoming vapor in trayed columns. When trays are replaced by packing, however, and especially structured packing, pressure drop through a column is typically reduced by a full order of magnitude.

A particularly effective tray in process columns is the sieve tray. This tray is constructed with a large number of apertures formed in the bottom surface. The apertures permit the ascending vapor to flow into direct engagement with the liquid that is flowing across the tray. When there is sufficient vapor flow upwardly through the tray, the liquid is prevented from running downwardly through the apertures (referred to as "weeping"). A small degree of weeping is normal in trays while a larger degree of weeping is detrimental to the capacity and efficiency of a tray.

The capacity of a tray is a function of the open area of holes and of tray spacing. When spacing is fixed, capacity may be increased by increasing the percent open area, but this practice is limited by decreased turndown due to weeping at low vapor rates. To overcome such weeping, a tray has been developed which is constructed from closely spaced rods of trapezoidal cross-section. They are manufactured and sold by the assignee of the present invention under the trademark SCREEN TRAY.

The trapezoidal wire members of the SCREEN TRAY are tapered upwardly, and this creates a Venturi effect to ascending vapor. Surface tension effects become pronounced with such close wire spacing. Combined with the Venturi effect produced by vapor rising through the tapered throats between the wires, surface tension phenomena reduce weeping significantly at low liquid rates and keep spray height low. The upward taper also defines a larger surface area for liquid flowing across the tray.

Tray efficiency is also known to be improved in sieve type trays by increasing the froth height of the liquid and reducing the backflow of the liquid flowing across the tray. Froth is created when vapor bubbles percolate upwardly through the liquid flowing across the tray. The suspension of the vapor in the liquid prolongs the vapor liquid contact which enhances the efficiency of the process. The longer the froth is maintained and the higher the froth is established, the greater the vapor liquid retention. Higher froth requires smaller vapor bubbles and the formation of the bubbles at a sufficiently slow rate. Likewise, backflow occurs beneath the froth when circulating currents of liquid are established during the liquid flow across the plate. This generally forms along the lateral portions thereof. These currents carry liquid back across the tray in a manner that reduces the concentration-difference driving force for mass transfer. It is the concentration-difference between the vapor and the liquid which enhances the effectiveness of the vapor-liquid contact.

The technology of gas-liquid contact is also represented in numerous prior art patents addressing process columns. These include U.S. Patent No. 4,499,035 assigned to Union Carbide Corporation that teaches a gas-liquid contacting tray with improved inlet bubbling means. A cross-flow type tray is therein provided with improved means for initiating bubble activity at the tray inlet comprising spaced apart, imperforate wall members extending substantially vertically upwardly and transverse to the liquid flow path. The structural configuration is said to promote activity over a larger tray surface than that afforded by simple perforated tray assemblies.

U.S. Patent No. 4,550,000 assigned to Shell Oil Company teaches apparatus for contacting a liquid with a gas in a relationship between vertically stacked trays in a tower. The apertures in a given tray are provided for the passage of gas in a manner les hampered by liquid coming from a discharge means of the next upper tray. Such advantages improve tray efficiency within the confines of prior art structures. Likewise, U.S. Patent No. 4,543,219 assigned to Nippon Kayaku Kabushiki Kaisha of Tokyo, Japan teaches a baffle tray tower. The operational parameters of high gas-liquid contact efficiency and the need for low pressure loss are set forth. Such references are useful in illustrating the need for high efficiency vapor liquid contact in tray process towers. U.S. Patent No. 4,504,426 issued to Carl T. Chuang (one of the inventors of the present invention) et. al. and assigned to Atomic Energy of Canada Limited is yet another example of gas-liquid contacting apparatus. This reference likewise teaches the multitude of advantages in improving efficiency in fractionation.

U.S. Patent No. 4,304,738 issued to Dale E. Nutter teaches, more specifically, a concept related to the present invention. The improvement set forth in this reference includes packing material formed of stacked panels of expanded metal, each of which has intersecting sets of parallel linear metal strips. The invention pertains to the use of such packing in conjunction with cross-flow type tray devices. The packing lies in the liquid on the tray deck in such a configuration that the liquid flowing across the tray and subjected to the actin of vapor must also flow through the packing material lying on the tray. As referenced therein minute liquid droplets adhere to the baffle, coalesce and fall as larger drops rather than being injected with the vapor into the liquid on the next tray thereabove. Likewise the sections of packing material are formed of vertical panels which lie parallel to the horizontal liquid flow direction across the tray. The panels are oriented with the linear strips being horizontal so as to be parallel to the axial liquid flow direction. This structured packing material is also shown to be located in proximity to the upper surface of the tray, therein providing an open area for the ascending vapor flow and minimizing the pressure drop thereacross. Such applications of structured packing are said to improve certain efficiency factors in the tray. However, numerous parameters determine overall tray efficiency.

The change in gas composition relative to the change that would occur at equilibrium leads to a determination of efficiency. This may be measured at points "n" on a plate where point efficiency ($E_{oq}$) is represented as:

$$E_{oq} = \frac{(Y_n - Y_{n-1})}{(Y^o_n - Y_{n-1})}\ \text{point}$$

$Y^o_n$ is gas concentration at equilibrium with liquid concentration at the point. Efficiency may also be measured for the entire plate (a stage efficiency measurement). The most recognized is probably the Murphree efficiency, which for vapor is:

$$E_{mv} = \frac{(Y_n - Y_{n-1})}{(Y^o_n - Y_{n-1})}\ \text{plate}$$

In this stage efficiency measurement, $Y^o_n$ in the gas concentration in equilibrium with the concentration of the liquid leaving the plate. The factors which effect plate efficiency are those factors which enhance or reduce effective mass transfer and include likelihood of incipient bubble formation, froth height, froth uniformity, and back-mixing.

It would be an advantage to provide a single sieve tray assembly manifesting inhibited incipient bubble formation, uniformity of finely dispersed bubble propagation, uniform froth height and concomitantly homogeneous liquid flow. This would, by definition, be represented by a marked increase in Murphree plate efficiency. Such a tray is provided by the present invention wherein a thin layer of knitted mesh packing is placed across a sieve type tray. The interwoven wire mesh creates a boundary layer to the ascending vapor flow that causes the vapor to become dispersed into relatively small bubbles in the liquid which are effective in achieving greater mass transfers. Likewise the mesh packing effects the liquid flow by limiting the back-mixing therein in cross-flow plate applications. Reduced back-mixing increases efficiency and homogeneity is maintained across the tray.

The present invention pertains to an improved sieve tray for a process column. More particularly, one aspect of the invention includes at least one layer of mesh packing disposed upon the sieve tray for enhancing the mass transfer between the vapor and the liquid. The sieve tray is, in one preferred embodiment, constructed of a plurality of wires having a generally trapezoidal cross section and secured one to the other in generally parallel spaced relationship. This type of tray is sold under the trademark SCREEN TRAY. In one embodiment the layer of mesh is on the order of one-half inch in thickness and is constructed of stainless steel. A single layer or multiple layers of mesh packing may also be provided in a thickness on the order of one inch. Moreover, the layer of mesh may be fabricated from Teflon or stainless steel.

In yet another aspect, the invention includes an improved method of vapor-liquid contact in a packed tower of the type wherein descending liquid flow mixes with ascending vapor flow through a sieve tray disposed therein. The improvement comprises the steps of forming a layer of mesh packing adapted for being received upon the sieve tray and positioning the mesh packing thereon. The liquid and vapor passes about the tray and the packing for mass transfer therebetween. In this regard the vapor passes upwardly through the tray and the liquid thereacross in a cross-flow tray configuration. The method further includes the step of constructing the sieve tray with trapezoidal wires secured one to the other in generally parallel spaced relationship. The step of forming the layer of mesh packing also includes the step of fabricating a stainless steel mesh with a thickness on the order of one-half inch and sizing the mesh to be received upon the sieve tray.

The invention will now be described by way of example and with reference to the accompanying drawings wherein:

FIG. 1 is a perspective view of a packed column with various sections cut away for illustrating a variety of tower internals and one embodiment of an improved sieve tray constructed in accordance with the principles of the present invention disposed therein;

FIG. 2 is a diagrammatic, side-elevational, cross-sectional view of the improved sieve tray of the present invention secured within a process tower and illustrating the counter-current flow of liquid and vapor therethrough;

FIG. 3 is a top-plan, diagrammatic view of a prior art sieve plate illustrating the liquid flow thereacross;

FIG. 4 is a perspective view of the sieve plate assembly of the present invention, with portions thereof cut away for purposes of clarity;

FIG. 5 is a graph of Murphree plate efficiency and F factor comparing the prior art to the present invention;

FIG. 6 is a graph of Murphree tray concentration and F factor comparing the prior art to the present invention;

FIG. 7 is a graph of total tray pressure drop and F factor comparing the prior art to the present invention;

FIG. 8 is a graph of visual froth height and F factor comparing the prior art to the present invention; and

FIG. 9 is an enlarged, side elevational, cross sectional view of the tray assembly of FIG. 4 taken along lines 9-9 thereof.

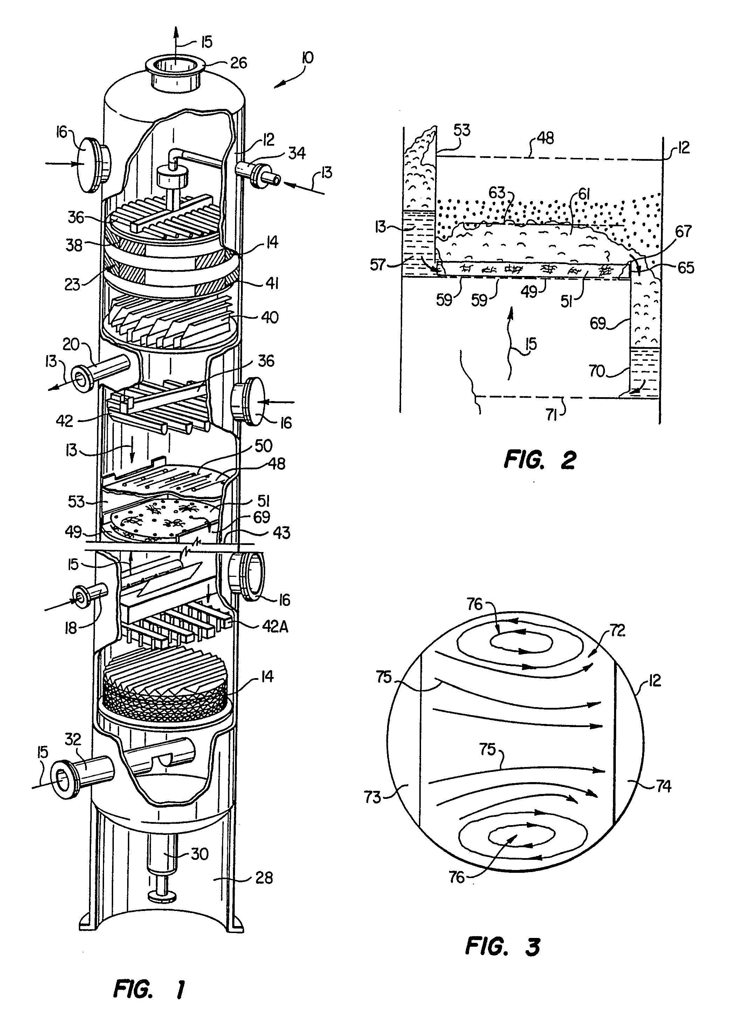

Referring first to FIG. 1, there is shown a fragmentary, perspective view of an illustrative packed exchange tower or column with various sections cut away for showing a variety of tower internals and the utilization of one embodiment of the improved high capacity tray assembly of the present invention. The exchange column 10 of FIG. 1 comprises a cylindrical tower 12 having a plurality of packing bed layers 14 and trays disposed therein. A plurality of manways 16 are likewise constructed for facilitating access to the internal region of the tower 12. Also provided are side stream draw off line 20, liquid side feed line 18, and side stream vapor feed line or reboiler return line 32. A reflux return line 34 is provided atop the tower 10.

In operation, liquid 13 is fed into the tower 10 through reflux return line 34 and side stream feed input feed line 18. The liquid 13 flows downwardly through the tower and ultimately leaves the tower either at side stream draw off 20, or at bottom stream draw off line 30. In its downward flow, the liquid 13 is depleted of some material which evaporates from it as it passes through the trays and packing beds, and is enriched or added to by material which condenses into it out of the vapor stream.

Still referring to FIG. 1, the exchange column 10 is diagrammatically cut in half for purposes of clarity. In this illustration, the column 10 includes a vapor outlet in overhead line 26 disposed atop the tower 12 and a lower skirt 28 disposed in the lower region of the tower around bottom stream takeoff line 30 coupled to a reboiler (not shown). Reboiler return conduit 32 is shown disposed above the skirt 28 for recycling vapor therein upwardly through the trays and/or packing layers 14. Reflux from condensers is provided in the upper tower region 23 through entry conduit 34 wherein reflux is distributed throughout a liquid distributor 36 across upper packing bed 38. It may be seen that the upper packing bed 38 is of the structured packing variety. The regions of the exchange column 10 beneath the upper packing bed 38 are shown for the purpose of illustration and include a liquid collector 40 disposed beneath a support grid 41 in support of the upper structured packing 38. A liquid distributor 42, adapted for redistributing liquid 13, is likewise disposed there-beneath. A second type of distributor 42A is shown below the cut-line 32 and disposed above bed 14. The column 10 is presented with cut-line 43 for illustrating the fact that the tower internals arrangement is diagrammatical only and is provided for referencing various component arrays therein.

Referring still to FIG. 1, an assembly of a pair of trays is also shown for purposes of illustration. In many instances, process columns contain only packing, only trays, or combinations of packings and trays. The present illustration is, however, a combination for purposes of discussion of the overall tower and its operation. A trayed column usually contains a plurality of trays 48 of the type shown herein. In many instances, the trays 48 are valve or sieve trays. Such trays comprise plates which are perforated or slotted in construction. The vapor and the liquid engage at or along the tray and, in some assemblies, are permitted to flow through the same openings in a counter-current flow arrangement. Optimally, the vapor and liquid flows reach a level of stability. With the utilization of downcomers, to be described in more detail below, this stability may be achieved with a relatively low flow rate permitting the ascending vapor to mix with the descending liquid. In some embodiments no downcomers are used and the vapor and the liquid use the same openings, alternating as the respective pressures change.

In the present embodiment, cross-flow trays 48 and 49 and downcomers 53 and 69 are illustrated. Tray 48 is of conventional design manifesting a conventional perforated, or slotted, surface 50. Tray 49 is constructed in accordance with the principles of the present invention as described below. It may be seen from this figure that the counter-current configuration between the ascending vapor 15 and the descending vapor 13 is the subject of a myriad of critical design considerations including liquid/vapor ratios, liquid cooling, liquid flow/back-mixing, foaming (froth), height, froth uniformity and the presence of solids or slurries therein. Corrosion is likewise a consideration of the various elements in the packed towers and the selection of the material in the fabrication of the tower internal is, in many instances, the result of such considerations. The anatomy of the packed column as shown in FIG. 1 is likewise described in more detail in an article by Gilbert Chen, one of the inventors herein, entitled "Packed Column Internals" appearing in the March 5, 1984 edition of Chemical Engineering, incorporated herein by reference.

Referring now to FIG. 2, there is shown a side-elevational, cross-sectional, diagrammatic view of the trays 48 and 49. The upper tray 48 is a planar panel that is perforated, as shown. The lower tray 49 is also of planar construction but includes a layer of mesh packing 51 is secured thereacross. Liquid 13 travels down a downcomer 53 from tray 48 disposed thereabove. The liquid 13 accumulates in a reservoir 57 at the lower end of the downcomer 53 thereby establishing a pressure head for liquid flow across the tray 49 and through the mesh 51. The ascending vapor 15 through the plurality of perforations 59 create a froth 61. The froth or "foam" is a region of aeration in which the phase of the liquid 57 is continuous. When the froth 61 does not exist or becomes discontinuous an inversion to a gas-continuous regime can result in a "spray" of gas upwardly therethrough. With the placement of the relatively thin, knitted mesh packing 51 across the top of the tray 49, the likelihood of this gas continuous regime is greatly reduced.

Still referring to FIG. 2, the froth 61 extends with a relatively uniform height, shown in phantom by line 63 across the width of the tray 49 to the opposite end 65 where a wier 67 is established for maintaining the froth height 63. The accumulated froth at this point flows over the top of the wier 67 into associated downcomer 69 that carries the froth downwardly into a downcomer apron 70 where the liquid accumulates and disperses upon a tray 71 therebeneath. Again tray 71 is shown herein diagrammatically for purposes of illustration only. The net area for vapor flow and area of the downcomers are critical aspects in the design of such a column. Likewise the area of holes and perforations for a single cross-flow plate establish the active length of the plate and the zone in which the froth 61 is established. It is however the manner of flow of the liquid 13 across the tray 49 which, in the present embodiment, is critical to tray efficiency. A flow diagram of a conventional sieve plate will be discussed below for purposes of illustrating the efficiency afforded by the present invention.

Referring now to FIG. 3, there is shown a flow diagram across a conventional sieve plate. The prior art sieve plate 72 is illustrated herein as a round tray having a first downcomer 73 for feeding liquid to the tray and a second downcomer 74 for carrying liquid away from the tray. A plurality of arrows 75 illustrate the non-uniform flow of liquid 13 across a conventional plate. Recirculation cells 76 are shown to be formed on both sides of the plate lateral to the direction of flow. The formation of these recirculation cells decreases the efficiency of the tray. These recirculation cells are the result of backflow near the walls of the process column and the backflow becomes more pronounced as the diameter of the column increases. With the increase in backflow and the resultant stagnation effect from the recirculation cells, concentration-difference driving force for mass transfer between the counter-flowing streams is reduced. The reduction in concentration-difference driving force will result in more contact or height requirement for a given separation in the column. Although back mixing is but a single aspect of plate efficiency, the reduction thereof is provided concurrently with the other positive factors of inhibiting incipient bubble formation and establishing a more uniform froth height. These aspects, which will be discussed in more detail below, contribute to an overall increase in Murphree efficiency as compared to the F factor and tray concentration.

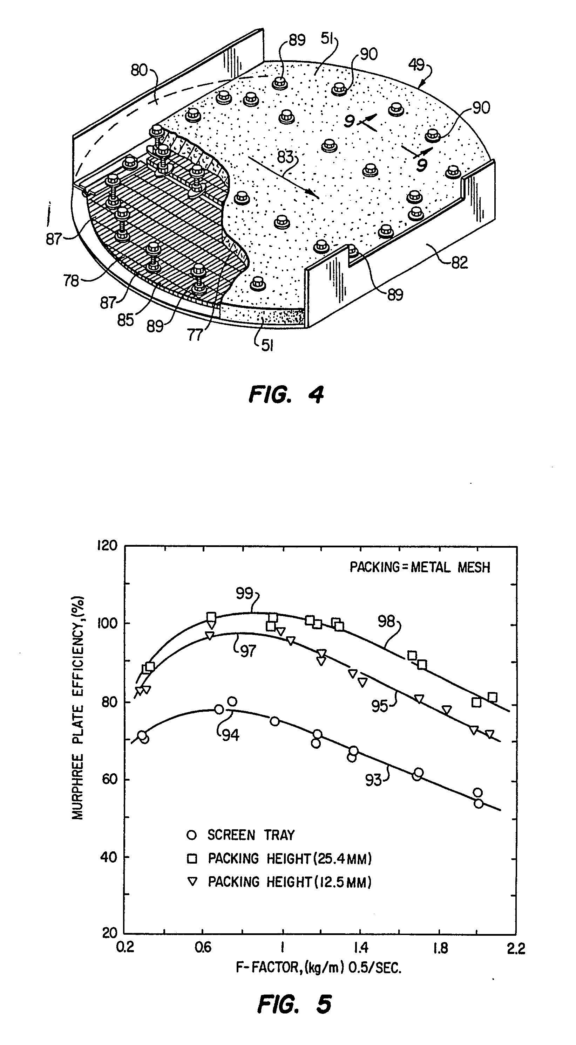

Referring now to FIG. 4, there is shown a fragmentary perspective view of the cross-flow tray 49 of the present invention with the mesh packing 51 assembled thereon. A section of the packing 51 is cut away to expose sidewall region 77 and the underlying tray area 78 for purposes of illustration. The tray 49 as shown herein is contructed for placement in the tower 12 whereby a feeding downcomer can be disposed adjacent inflow tray side 80 for providing liquid 13 thereto. A weir 82 is disposed on the opposite side of tray 49 whereby a second downcomer (not shown) may be disposed for carrying froth 61 and liquid 13 away from the tray 49. The flow of liquid 13 across the tray occurs in the direction of arrow 83. This flow direction will be substantially uniform in accordance with the principles of the present invention and without the backflow problems discussed above. In this manner, the absence of back mixing will increase the concentration-difference driving force for mass transfer between the counter-flowing streams. The ascending vapor stream will thus pass through the apertures defined between adjacent wires 55 of the tray 49. Wires 55 having trapezoidal outer surface 56 support the mesh packing 51 thereabove and provide a top surface area 85 upon which liquid 13 is permitted to flow across. The spacings 87 between adjacent wires 85 define regions of ascending vapor flow, the configuration of which will be defined in part by the shape of the adjacent wires.

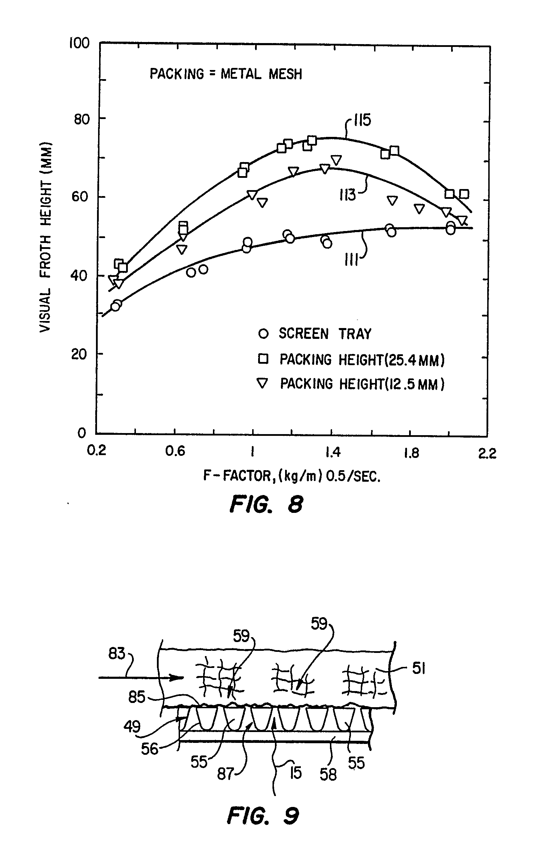

Referring now to FIG. 9, a section of the tray assembly 49 is diagrammatically shown. In this embodiment, the sieve type tray is constructed with trapezoidal, or V-shaped, wire 55. It is incorporated into a SCREEN TRAY type sieve tray embodiment. SCREEN TRAY is a trademark of the assignee of the present invention and represents tray 49 constructed with the array of V-shaped wires 55 disposed in generally parallel spaced relationship. The adjacent V-shaped wires 55 are secured by cross members 58 and form a "Venturi" shaped slit 87 between each of the wires resulting in very low energy loss. The relative size of the mesh 51 and tray 49 are not to scale and are presented by illustrating the tray assembly. Each wire 55 has a trapezoidal surface 56 forming the above defined tapered slit 87. Such a tray operates in the froth regime at maximum efficiency over a wide range of conditions. Gas 15 is thus shown rising to engage liquid 13 flowing orthogonal thereto through the mesh 51. The result is a swirling pattern 59 of gas and liquid effecting efficient mass transfer. Likewise, froth height is maximized, entrainment is minimized and low pressure drop results in reduced downcomer backup. The placement of knit style mesh packing 51 thereabove provides an enhancement in tray efficiency, with minimum height. The thicknesses of the mesh packing 51 can vary and any height for which the pressure drop is not too great is possible. To date, tests have been run on thicknesses on the order of one-half to one inch.

Referring now to FIGS. 4 and 9 in combination, the packing 51 is secured to the tray 49 in the present embodiment through threaded securement established by a plurality of mounting members 89. Threaded mounting members are conventionally used to support tray sections and for mounting of the wire arrays thereacross. An elongated bolt 89 is utilized with a conventional nut and flat washer 90 for providing ample security to the knitted mesh mat 51 disposed thereon. It may be seen that the mesh 51 comprises an interwoven, or knitted, wire configuration that presents tortuous vapor passages and high liquid-vapor interfacial surface. This woven wire configuration may be of the type set forth and shown in U.S. Patent No. 3,218,048 entitled "Packing for Fractionating Column and the Like", issued to S.M. Smith, Jr., et. al. in 1965. This patent subsequently assigned to the assignee of the present invention teaches a multi-filament strand knit. It can be fabricated from stainless steel and is generally crimped and plied when sold under the federally registered trademark METPAK. Similar packings such as that sold under the federally registered trademark GOODLOE could likewise be used. GOODLOE packing is a knit of fine metallic or non-metallic filaments (such as plastic) that can be flattened, crimped and plied. This fabrication produces a myriad of twisting paths for the fluid flowing therethrough. The mesh packing, as compared to prior art structured packing, provides a close knit, interaction regime for the cross-flow liquid and ascending vapor. The fine wire of mesh packing presents an extremely high surface area per unit volume (585 square feet per cubic foot for GOODLOE packing) which promotes effective mixing, and continuous division and recombination of the streams. The mesh packing 51 lays horizontally across the tray 49 so that all ascending vapor passes through the tortuous passageways between wires in the criss-cross wire sections, through which liquid is flowing in a generally orthogonal relationship thereto. In effect the liquid and vapor flow therethrough is tantamount to a complex, orthogonal flow pattern, the result of which is a substantially homogenous mixing region with a substantially uniform froth or foam established thereabove. The liquid flow around, under and through the myriad of interspersed and interlaced wires comprising the mesh packing creates a liquid flow regime of substantially uniform overall directionality as represented by arrow 83. The precise thickness of the mesh mat 51 may vary and said variance may be the result of combination of layers and/or the use of crimped mesh such as METPAK "high efficiency" packing. For example, METPAK mesh packing in thicknesses of one-half inch (12.5 mm) and one inch (25.4 mm) have been tested as described below. Other, greater thicknesses are possible. The one inch thickness has been the result of combining two one-half inch thicknesses of METPAK "high efficiency" packing on a SCREEN TRAY. The results and ramifications of said tests are discussed below.

Referring now to FIG. 5, the Murphree plate efficiency is charted against the F factor. The data in FIGS. 5-8 addresses a methanol/water system, a SCREEN TRAY of the type described above, assembled first without packing and a SCREEN TRAY 49 assembly incorporating one and two layers of mesh packing 51 in accordance with the principles of the present invention. The test in FIG. 5 is run at an average test tray concentration of 44% by mole. As seen in this chart, the SCREEN TRAY without mesh has a maximum Murphree efficiency of around 77% at an F factor of about 0.7. This is represented by line 93 at point 94. With a single packing layer establishing a height on the order of one-half inch (12.5 millimeters) the maximum Murphree plate efficiency occurs at a level of approximately 97% at an F factor of approximately 0.8. This curve on the chart is represented by line 95. The maximum point of efficiency occurs at a zone 97. An increase in packing height thickness utilizing two one-half inch layers of metal mesh packing as described above, results in the curve 98. A point 99 is shown on curve 98 manifesting a Murphree plate efficiency in excess of 100%. Such an efficiency level is quite possible due to the factors involved in establishing Murphree plate efficiency.

The improvement in tray efficiency represented herein is a result in part of the inhibition of the incipient bubble formation through the mesh. The bubbles of the vapor become very finely dispersed due to this tightly knit, interwoven mesh. Such a result is not accomplished by vertically oriented structured packing. Likewise, the uniform froth height herewith established by the reduction in back mixing is specifically the result of the homogeneous interaction of vapor and liquid established by the non-structured packing mesh flow regime. The back mixing is reduced to the point where a true plug flow regime is approached.

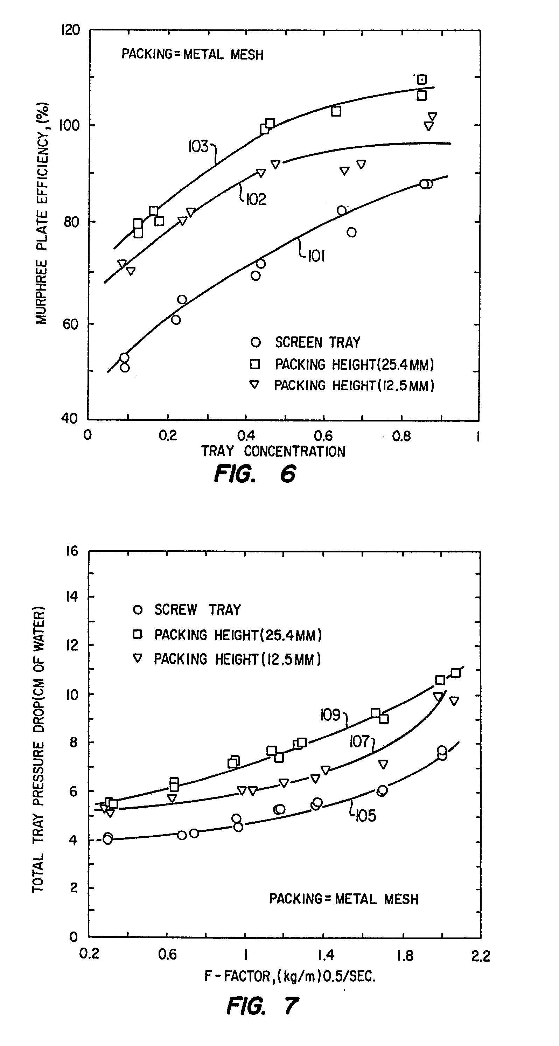

Referring now to FIG. 6, Murphree plate efficiency is plotted against tray concentration for a metal mesh packing. The F-factor was 1.15. Curve 101 represents a standard screen tray with curve 102 representing a screen tray having a one-half inch (12.5 millimeter) metal mesh packing assembled thereon. The effect of the concentration on tray efficiency is considerable. Throughout the range of tray concentration between 0.1 and 0.5 the Murphree plate efficiency exhibits an efficiency increase of approximately 20%. This increase in efficiency is further improved by utilizing a packing height of two inches (25.4 millimeters). The Murphree plate efficiency increase is on the order of 5% for tray concentration flow between the 0.1 and 0.3. For tray concentration flows in the region of 0.7, the increase in Murphree efficiency is on the order of 10%.

Referring now to FIG. 7, total tray pressure drop is plotted against F factor for the metal mesh packing as described above. Again, the average test tray concentration was 44% by mole. Curve 105 represents a standard SCREEN TRAY with cures 107 and 109 representing one-half inch and one inch metal mesh packing, respectively. It may be seen that the total tray pressure drop increases by no more than 1.4 centimeters of water throughout the F factor range of 0.2 to 1.4. This pressure drop increase is for half inch packing. With one inch packing, the pressure drop increase at an F-factor of 1.4 is approximately three (3) centimeters of water. By comparing the total tray pressure drop increase for the addition of the mesh packing of the present invention with the increase in Murphree efficiency, it may be seen that the effective cost of use of such mesh packing is extremely low for the benefit to be derived therefrom.

Referring now to FIG. 8, yet another parameter of tray efficiency is plotted wherein visual froth height in millimeters is plotted against the F factor. The average test tray concentration was 44% by mole. Curve 111 represents a bare SCREEN TRAY with curves 113 and 115 representing the addition thereto of one-half and one inch packings, respectively. It may seen that the visual froth height is uniformly increased through the F factor range of 0.2 to 1.6. At an F factor of 1.4 the visual froth height increase for a one-half inch packing is approximately 20 millimeters greater than without the mesh in the present invention. This is approximately a 40% increase in visual froth height and a marked improvement over the prior art.

The above has shown that placing wire mesh packing on decks of SCREEN TRAYS gives rise to the following phenomena:

(1) Incipient bubble formation is inhibited.

(2) Bubbles of vapor become very finely dispersed.

(3) Froth height becomes more uniform.

(4) Back mixing is reduced to the point where the true plug flow regime is approached.

All of these effects enhance mass transfer efficiency while maintaining high capacity and they represent a marked improvement over the prior art.

It is thus believed that the operation and construction of the present invention will be apparent from the foregoing description. While the method and apparatus shown or described has been characterized as being preferred it will be obvious that various changes and modifications may be made therein without departing from the spirit and scope of the invention as defined in the following claims.

## Claims

1. An improved sieve tray assembly for a process column of the type wherein liquid flow downwardly through the column to the tray and vapor flows upwardly through the column and through the tray for interaction and mass transfer with the liquid, said improvement comprising at least one layer of mesh packing disposed upon said sieve tray in position to interact with downflowing liquid and upflowing gas to enhance mass and/or energy transfer therebetween.

2. The apparatus as set forth in Claim 1 wherein said sieve tray is constructed of a plurality of wires having a generally trapezoidal cross section and secured one to the other in generally parallel spaced relationship.

3. The apparatus as set forth in Claim 1 wherein said layer of mesh is on the order of one-half inch in thickness and is constructed of stainless steel.

4. The apparatus as set forth in Claim 1 wherein said layer of mesh is on the order of one inch in thickness and is constructed of stainless steel.

5. The apparatus as set forth in Claim 1 wherein said layer of mesh is fabricated from Teflon.

6. The apparatus as set forth in Claim 1 wherein said mesh packing is secured to said tray with threaded members extending therethrough.

7. The apparatus as set forth in Claim 1 wherein said sieve tray is a Screen Tray type sieve tray and said mesh packing is formed from stainless steel.

8. The apparatus as set forth in Claim 7 wherein said stainless steel packing is formed in a layer having a thickness on the order of one-half inch.

9. The apparatus as set forth in Claim 1 wherein said sieve tray is a cross-flow tray.

10. An improved method of vapor-liquid contact in a packed tower of the type wherein descending liquid flow mixes with ascending vapor flow through a sieve tray disposed therein, wherein said improvement comprises the steps of:

forming a layer of mesh packing adapted for being received upon said sieve tray;

positioning said mesh packing upon said sieve tray; and

passing liquid and vapor about said tray and through said packing for mass transfer therebetween.

11. The method as set forth in Claim 10 and further including the step of constructing said sieve tray with trapezoidal wires secured one to the other in generally parallel spaced relationship.

12. The method as set forth in Claim 10 wherein the step of forming said layer of mesh packing includes the step of fabricating a stainless steel mesh with a thickness on the order of one-half inch and sizing said mesh to be received upon said sieve tray.

13. The method as set forth in Claim 10 wherein the step of forming said layer of mesh packing includes the step of fabricating a stainless steel mesh with a thickness on the order of one inch and sizing said mesh to be received upon said sieve tray.

14. The method as set forth in Claim 10 wherein said step of forming said layer of mesh packing includes the step of fabricating a Teflon mesh.

15. The method as set forth in Claim 10 wherein said step of forming a layer of mesh packing includes the step of fabricating stainless steel mesh and sizing said mesh to be received upon said tray, and further including the step of constructing said tray of a plurality of wires having a generally trapezoidal cross section and securing said stainess steel mesh thereon.

FIG. 1

FIG. 2

FIG. 3

**FIG. 4**

**FIG. 5**

**FIG. 6**

**FIG. 7**

**FIG. 8**

**FIG. 9**